# FASCICULE DE BREVET EUROPEEN

(11) **EP 3 839 449 B1**
(45) Date de publication et mention de la délivrance du brevet: **17.08.2022**
(21) Numéro de dépôt: 20215258.3
(22) Date de dépôt: 18.12.2020
(51) Int. Cl.: G01G 21/22

(54) **DISPOSITIF ÉLECTRONIQUE DE PESÉE À FONCTIONNEMENT SIMPLIFIÉ**
ELEKTRONISCHE WIEGEVORRICHTUNG MIT VEREINFACHTER FUNKTIONSWEISE
ELECTRONIC WEIGHING DEVICE WITH SIMPLIFIED OPERATION

(30) Priorité: 19.12.2019 FR 1914864
(43) Date de publication de la demande: 23.06.2021
(73) Titulaire: SEB S.A., 69130 Ecully (FR)
(72) Inventeur: PLANTEROSE, Thierry, 69230 Saint-Genis-Laval (FR); ABERBACHE, Belkacem, 74150 Rumilly (FR)
(74) Mandataire: SEB Développement

(56) Documents cités:
- EP-A1- 2 015 036
- CN-U- 202 372 245

## Description

L'invention concerne le domaine technique général du petit électroménager, et plus précisément des équipements de pesage, en particulier domestiques, utilisés par exemple à des fins de préparation culinaire (balance de cuisine) ou dans le secteur du soin de la personne (pèse-personne).

L'invention concerne plus précisément un dispositif électronique de pesée.

Les balances de cuisine électroniques sont bien connues et permettent à un utilisateur d'accéder aisément et de façon précise à des informations concernant la masse d'ingrédients, pour réaliser une recette de cuisine par exemple. Ces balances de cuisine électroniques connues comprennent généralement un plateau destiné à recevoir l'objet à peser (par exemple un récipient rempli d'aliments) ainsi qu'une interface de commande et d'affichage munie de différents boutons de commande et d'un écran affichant la masse instantanée mesurée.

Ces balances de cuisine connues donnent globalement satisfaction, mais présentent néanmoins différents inconvénients.

En particulier, ces balances de cuisine digitales connues s'avèrent être relativement encombrantes, en raison notamment de la taille de leur plateau qui est dimensionné pour pouvoir supporter non seulement des récipients de petite taille (tasse, verre doseur, gobelet, coupelle...) mais également des récipients de grande taille (saladier, bac, plat à four...). Cet encombrement relativement conséquent est susceptible de poser des problèmes de stockage et de rangement. Du fait de cet encombrement significatif, il s'avère en outre relativement malaisé et peu pratique de transporter la balance électronique, par exemple sur un lieu de vacances. De plus, il n'est pas certain que le plateau des balances connues, même lorsqu'il est de grande taille, pourra forcément s'adapter à toutes les tailles de contenants, et notamment aux récipients de très grande taille.

Les balances de cuisine connues ne peuvent pas non plus être aisément utilisées dans un contexte d'accompagnement nutritionnel (« *coaching nutritionnel* ») impliquant le pesage de portions lors du repas. Les balances de cuisine connues ne sont en effet pas du tout adaptées à un usage simple, discret et rapide à table, notamment en contexte de mobilité (repas pris à l'extérieur hors du domicile, par exemple dans un restaurant avec service à table ou en self-service, ou dans un cadre amical ou familial avec service d'un plat à table), en raison notamment de leur encombrement, de leur poids et de leur relative fragilité. Leur interface de commande et d'affichage n'est de plus pas pratique à utiliser en cours de repas, surtout de façon discrète. En particulier, les balances de cuisine connues sont mal adaptées pour peser des aliments disposés sur un plateau ou une assiette, qui risque de masquer l'écran d'affichage, interdisant de ce fait à l'utilisateur d'accéder aisément à la valeur de la masse mesurée. Le document EP2015036A1 divulgue un dispositif électronique de pesée comprenant une pluralité de socles de pesées, incluant au moins un premier et un deuxième socle de pesée.

Les objets assignés à l'invention visent par conséquent à remédier aux différents inconvénients exposés dans ce qui précède et à proposer un nouveau dispositif de pesée qui soit compact, léger, adaptable à toute taille d'objet à peser, aisément transportable, et d'utilisation particulièrement simple, intuitive et discrète.

Un autre objet de l'invention vise à proposer un nouveau dispositif électronique de pesée qui ne requiert qu'un minimum de manipulation pour le contrôle de son fonctionnement.

Un autre objet de l'invention vise à proposer un nouveau dispositif électronique de pesée particulièrement adapté à une utilisation à table, en cours de repas, y compris en contexte de mobilité hors domicile.

Un autre objet de l'invention vise à proposer un nouveau dispositif électronique de pesée dont la conception permet de peser différents objets de façon particulièrement simple et rapide.

Un autre objet de l'invention vise à proposer un nouveau dispositif électronique de pesée aisément adaptable à de multiples usages.

Un autre objet de l'invention vise à proposer un nouveau dispositif électronique de pesée particulièrement fiable et robuste.

Un autre objet de l'invention vise à proposer un nouveau dispositif électronique de pesée dont la conception permet non seulement un usage furtif et discret, mais également l'accès à une interface utilisateur particulièrement riche, pratique et intuitive.

Les objets assignés à l'invention sont atteints à l'aide d'un dispositif électronique de pesée caractérisé en ce qu'il comprend :
- une pluralité de socles de pesées, incluant au moins un premier et un deuxième socle de pesée aptes à être assemblés l'un à l'autre de manière amovible, chacun étant conçu pour mesurer un poids s'exerçant sur lui, et
- un système de commande conçu pour commander une mise en fonctionnement automatique dudit dispositif en réponse à une séparation desdits premier et deuxième socles de pesée, ces derniers étant initialement assemblés l'un à l'autre.

D'autres particularités et avantages de l'invention ressortiront plus en détail à la lecture de la description faite ci-après, en référence aux dessins annexés, donnés uniquement à titre d'exemple illustratif et non limitatif, parmi lesquels :

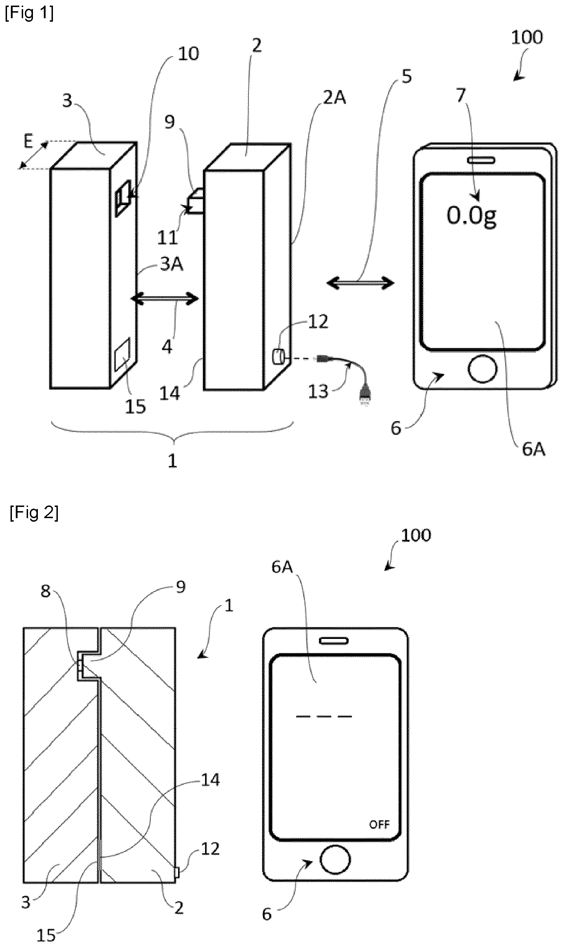

La figure 1 illustre, selon une vue schématique en perspective, un système électronique de pesée qui inclut d'une part un dispositif électronique de pesée selon un premier mode de réalisation de l'invention, et d'autre part un terminal externe formé en l'espèce par un téléphone multifonction, le dispositif électronique de pesée se trouvant dans une configuration de fonctionnement selon laquelle les premier et deuxième socles de pesée sont séparés l'un de l'autre.
La figure 2 illustre le système de la figure 1 avec le dispositif électronique de pesée qui se trouve cette fois dans une configuration d'arrêt correspondant à l'assemblage des premier et deuxième socles de pesée, lesquels sont représentés selon une vue schématique en coupe.

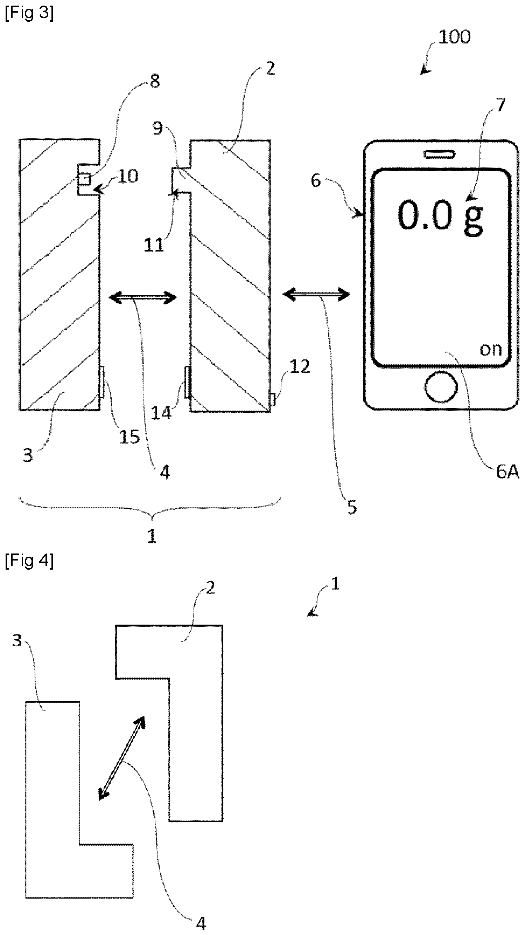

La figure 3 correspond à la figure 1 en vue de face, les premier et deuxième socles du dispositif électronique de pesée étant représentés schématiquement selon une vue en coupe.
La figure 4 illustre un deuxième mode de réalisation du dispositif électronique de pesée selon l'invention, qui diffère du premier mode de réalisation des figures 1 à 3 par la forme des premier et deuxième socles de pesée, lesquels présentent chacun cette fois une forme sensiblement en « L », alors qu'ils présentent chacun une forme en « I » dans le mode de réalisation des figures1 à 3.

Le dispositif de pesée 1 conforme à l'invention permet de fournir une information relative au poids ou à la masse d'un objet. Plus précisément, le dispositif de pesée 1 selon l'invention est un dispositif électronique de pesée, qui met avantageusement en oeuvre des capteurs ou transducteurs, par exemple des capteurs de pesage à jauge de contrainte, permettant de convertir la force (ou la pression) exercée par l'objet pesé sur le capteur en un signal électrique reflétant le poids ou la masse de l'objet pesé. Le dispositif 1 forme ainsi un dispositif électronique de pesage, et de préférence un dispositif électronique de pesée à usage domestique, par exemple dans un contexte de préparation culinaire (balance de cuisine) ou de soins de la personne (pèse-personne). De préférence, le dispositif de pesée 1 forme ainsi une balance de table ou un pèse-personne, étant entendu que l'invention n'est nullement limitée à ces deux applications préférentielles.

Conformément à l'invention, le dispositif électronique de pesée 1 comprend une pluralité de socles de pesée 2, 3, qui sont de préférence distincts et indépendants les uns des autres. Dans les modes de réalisation illustrés aux figures, les socles de pesée 2, 3 constituent des unités individuelles séparées, qui peuvent être librement déplacées les unes par rapport aux autres selon de multiples configurations non prédéterminées. Il est cependant envisageable, dans un mode de réalisation non illustré, que les socles de pesée 2, 3 en question soient attachées l'un à l'autre par un lien, par exemple un lien souple (cordon, chaînette ou équivalent) autorisant une liberté complète de déplacement relatif des socles de pesée 2, 3 dans la limite cependant d'un écartement maximal relatif correspondant à la longueur du lien en question, pour éviter la perte de l'un ou l'autre desdits socles 2, 3.

Ladite pluralité de socles de pesée 2, 3 inclut au moins un premier et un deuxième socle de pesée 2, 3, chacun étant conçu pour mesurer un poids s'exerçant sur lui. En d'autres termes, chacun desdits socles de pesée 2, 3 embarque des moyens (transducteur ou capteur de pesage, par exemple à jauge de contrainte, comme évoqué précédemment) permettant, lorsque le socle de pesée 2, 3 concerné est soumis à un poids s'exerçant sur lui, de fournir un signal électrique de sortie représentatif de la valeur du poids en question. Chaque socle de pesée 2, 3 est avantageusement autonome, c'est-à-dire qu'il peut mesurer le poids s'exerçant sur lui sans être relié à un élément externe, comme par exemple une source d'énergie. De façon avantageuse, chaque socle de pesée 2, 3 embarque ainsi :
- un capteur de pesage, par exemple un capteur de pesage de type poutre, avantageusement à jauge de contrainte ;
- un module de pilotage électronique, se présentant par exemple sous la forme d'une carte électronique (circuit imprimé), permettant de piloter le fonctionnement du capteur de pesage et de fournir en temps réel, de façon continue, un signal de sortie représentatif du poids instantané mesuré par le capteur ;
- une source d'énergie, par exemple une pile ou une batterie, de préférence rechargeable.

Chaque socle de pesée 2, 3 comprend avantageusement un boîtier qui abrite en son sein l'ensemble des composants mentionnés ci-dessus, ainsi que d'autres composants qui seront détaillés ci-après.

Dans l'exemple illustré aux figures, la pluralité de socles de pesée inclut uniquement un premier et un deuxième socle de pesée 2, 3. Il est cependant parfaitement envisageable que le nombre de socles de pesée soit supérieur à deux, et par exemple égal à trois ou quatre, voire plus, sans pour autant que l'on sorte du cadre de l'invention.

Conformément à l'invention, lesdits premier et deuxième socles de pesée 2, 3 sont aptes à être assemblés l'un à l'autre de manière amovible. En d'autres termes, le premier socle de pesée 2 et le deuxième socle de pesée 3 sont conçus pour pouvoir être mutuellement attachés de manière réversible, ce qui leur permet de passer, en réponse à une intervention de l'utilisateur (par exemple sous la forme d'un effort de dissociation des socles 1, 2 exercé manuellement sur ces derniers) :
- d'une configuration assemblée (figure 2) dans laquelle les premier et deuxième socles 2, 3 sont reliés mécaniquement l'un à l'autre, pour former ainsi un sous-ensemble monobloc unitaire,
- à une configuration séparée (figures 1 et 3), dans laquelle les premier et deuxième socles 2, 3 sont détachés l'un de l'autre et forment ainsi chacun une entité indépendante respective,
et vice versa.

Avantageusement, le dispositif de pesée 1 comprend un organe de verrouillage pour maintenir assemblés l'un à l'autre lesdits premier et deuxième socles 2, 3. L'organe de verrouillage est avantageusement désactivable à volonté par l'utilisateur, préférentiellement de façon manuelle (par exemple par simple écartement relatif des premier et deuxième socles 2, 3) pour permettre la séparation desdits premier et deuxième socles de pesée 2, 3, puis leur réassemblage, et ainsi de suite, selon la volonté de l'utilisateur. De façon préférentielle, l'organe de verrouillage comprend des premier et deuxième moyens d'assemblage complémentaires portés respectivement par les premier et deuxième socles de pesée 2, 3 et coopérant pour maintenir assemblés entre eux lesdits premier et deuxième socles de pesée 2, 3. Ces moyens d'assemblage peuvent être par exemple des moyens d'attache magnétiques permettant de réaliser une attraction magnétique de liaison entre les premier et deuxième socles de pesée 2, 3 lorsque ces derniers sont suffisamment rapprochés l'un de l'autre. De tels moyens d'attaches magnétiques peuvent par exemple comprendre un aimant permanent embarqué dans l'un desdits premier et deuxième socles de pesée 2, 3 et un élément complémentaire réalisé en un matériau attiré par l'aimant (par exemple un matériau ferromagnétique) embarqué dans l'autre desdits premier et deuxième socles de pesée 2, 3. Il est alternativement envisageable de mettre en œuvre, en lieu et place de moyens d'attache magnétiques, des moyens d'attache mécaniques, mettant en œuvre par exemple un interverrouillage de deux pièces rigides, ou bien un système de clipsage, ou encore un système de crochets et boucles textiles (comme par exemple le système commercialisé sous la marque déposée Velcro ^{®}), cette liste n'étant bien entendu pas limitative.

Ainsi, les premier et deuxième socles de pesée 2, 3 peuvent passer à volonté, sous l'influence d'une intervention, de préférence manuelle, de l'utilisateur, d'une configuration compacte, de rangement, dans laquelle les premier et deuxième socles de pesée 2, 3 sont assemblés l'un à l'autre (figure 2), à une configuration développée, d'utilisation, dans laquelle les socles de pesée 2, 3 sont dissociés et écartés l'un de l'autre, la distance entre les socles 2, 3 ainsi que leur orientation relative pouvant être avantageusement librement ajustées par l'utilisateur. Grâce à cette caractéristique technique spécifique, le dispositif électronique de pesée 1 peut être facilement adapté à une multiplicité de géométries, de tailles et d'encombrements de l'objet à peser. Ainsi, si l'objet à peser présente un faible encombrement, les premier et deuxième socles de pesée 2, 3 pourront être positionnés de manière relativement proche, jusqu'à par exemple se toucher. Dans le cas où l'objet à peser est au contraire de grande taille (par exemple une assiette ou un plateau de restaurant « *self-service»*)*,* les socles de pesée 2, 3 peuvent être écartés l'un de l'autre de façon plus importante, afin de fournir un support stable pour l'objet à peser. Le recours à un dispositif électronique de pesée 1 mettant en œuvre une pluralité de socles de pesée 2, 3 permet également de réaliser, de préférence de manière simultanée, des opérations de pesage de différents objets, un premier objet exerçant par exemple son poids sur le premier socle de pesée 2, tandis qu'un deuxième objet exerce quant à lui indépendamment son poids sur le deuxième socle de pesée 3.

Avantageusement, la pluralité de socles de pesée comprend un socle maître, formé par exemple par le premier socle 2, et au moins un socle satellite formé par exemple par le deuxième socle 3. Dans l'exemple illustré aux figures, le dispositif électronique de pesée 1 comprend, outre le socle maître, un unique socle satellite. Il est cependant parfaitement envisageable que le dispositif électronique de pesée 1 comprenne une pluralité de socles satellites, destinés à être associés à un unique socle maître. La description qui suit est centrée, pour des raisons de concision, sur l'exemple illustré aux figures mettant en œuvre une paire de socles 2, 3 formant respectivement le socle maître et un unique socle satellite. Les principes exposés dans cette description restent toutefois parfaitement applicables à un dispositif 1 mettant en œuvre une pluralité de socles satellites coopérant avec le socle maître.

Avantageusement, le dispositif électronique de pesée 1 comprend des premiers moyens de communication 4, qui sont de préférence des moyens de communication sans fil, entre le socle satellite (formé par le deuxième socle 3) et le socle maître (formé par le premier socle 2), pour transmettre du socle satellite au socle maître un premier signal représentatif du poids mesuré par le socle satellite. La communication sans fil entre le socle satellite et le socle maître peut être mise en œuvre par tout moyen connu, et par exemple tout moyen utilisant un rayonnement électromagnétique. Par exemple, les premiers moyens de communication 4 sans fil sont conçus pour établir une connexion de données par rayonnement infrarouge entre le socle satellite et le socle maître. Ainsi, le socle satellite, formé en l'espèce par le premier socle de pesée 2, comprend avantageusement un émetteur infrarouge relié fonctionnellement au capteur de pesée embarqué dans le deuxième socle 3, pour émettre un signal infrarouge correspondant audit premier signal représentatif du poids mesuré par le socle satellite, tandis que le socle maître comprend quant à lui avantageusement un récepteur infrarouge permettant de capter le signal en question, qui est ainsi récupéré par le socle maître pour traitement et/ou transmission vers l'extérieur, comme décrit ci-après. Bien entendu, dans le cas où le dispositif 1 comprend une pluralité de socles satellites, les premiers moyens de communication susvisées assurent une communication, avantageusement sans fil, entre chaque socle satellite et l'unique socle maître, pour transmettre de chaque socle satellite au socle maître des signaux respectifs représentatifs du poids respectif mesuré par chaque socle satellite.

Avantageusement, le dispositif 1 comprend également des seconds moyens de communication 5, de préférence sans fil, entre le socle maître (formé en l'espèce par le premier socle de pesée 2) et un terminal externe 6 (comme par exemple un téléphone multifonction ou « *smartphone »,* un ordinateur, une tablette informatique, ou tout autre terminal informatique approprié), pour transmettre du socle maître audit terminal externe 6 un signal de sortie représentatif dudit premier signal et d'un deuxième signal représentatif d'un poids mesuré par le socle maître, en vue d'une présentation à un utilisateur, par ledit terminal externe 6, d'au moins une information 7 relative au poids mesuré respectivement par les socles maître et satellite. Ladite information 7 relative au poids mesuré respectivement par les socles maître et satellite peut consister en un poids (exprimé en Newtons par exemple), une masse (exprimée par exemple en grammes), une variation de poids ou de masse, un équivalent en calories, ou toute autre valeur ou indicateur pertinent.

La communication sans fil entre le socle maître et le terminal externe 6 peut être assurée par tout moyen connu. Par exemple, les seconds moyens de communication 5 sans fil sont conçus pour établir une connexion de données par radiofréquences, de préférence selon un protocole Bluetooth ^{®}, entre le socle maître et le terminal externe 6.

Ainsi, chaque socle satellite assure avantageusement au moins une double fonction, savoir :
- une fonction de mesure du poids qui s'exerce sur lui ;
- et une fonction de transmission au socle maître de données représentatives dudit poids mesuré.

Le socle maître assure quant à lui de préférence au moins une triple fonction, savoir :
- une fonction de mesure du poids exercé sur lui ;
- une fonction de récupération et de transmission au terminal externe 6 des données relatives au poids mesuré par chaque socle satellite ;
- et une fonction de transmission au terminal externe 6 de données représentatives du poids mesuré par le socle maître lui-même.

Cette architecture originale permet d'optimiser le dispositif 1 de façon à le rendre particulièrement compact, léger et fiable. Bien entendu, l'invention n'est pas limitée à une architecture particulière de communication entre les socles satellite et maître, ni à la mise en œuvre d'un terminal externe. Alternativement, le socle maître peut par exemple embarquer un module de traitement et d'affichage pourvu d'un écran affichant à l'attention de l'utilisateur ladite information 7 relative au poids mesuré respectivement par les socles maître et satellite. Le recours à un terminal externe est toutefois préféré car il permet avantageusement de déporter notamment les moyens d'affichage, simplifiant et allégeant ainsi le dispositif 1, qui peut dès lors être aisément transporté (en étant par exemple glissé dans une poche d'un vêtement) et être utilisé de façon discrète.

Comme évoqué précédemment, le terminal externe 6 est avantageusement constitué par un téléphone multifonction, lequel est classiquement doté de moyens de traitement informatique (microprocesseur, etc.), de moyens de communication (et en particulier de moyens de communication radio, par exemple selon un protocole Bluetooth ^{®}), et d'un écran d'affichage 6A, qui peut être par exemple un écran tactile. L'utilisateur du dispositif 1 peut ainsi utiliser, à titre de terminal externe 6, son propre téléphone multifonction, qu'il lui suffit d'appairer, selon les procédures classiques d'appairage de type Bluetooth ^{®} par exemple, avec le socle maître uniquement, ce dernier assurant quant à lui la récupération, le traitement et la transmission des informations de poids en provenance de chaque socle satellite. L'invention permet ainsi dans ce cas de déporter le système de présentation d'informations tout en bénéficiant de moyens de traitement et de calcul déportés puissants et évolutifs.

L'invention concerne d'ailleurs également en tant que tel un système électronique de pesée 100 incluant d'une part le dispositif électronique de pesée 1 selon l'invention, et d'autre part le terminal externe 6, constitué par exemple par un téléphone multifonction.

Avantageusement, le socle maître comprend une unité de traitement de signal, préférentiellement embarquée en son sein (c'est-à-dire en l'espèce au sein du premier socle de pesée 2). Ladite unité de traitement de signal est configurée pour calculer, à partir des premier et deuxième signaux précités, une valeur de poids total ou de masse totale appliqué sur les socles maître et satellite, de sorte que ledit signal de sortie transmis au terminal externe 6 est représentatif de ladite valeur de poids total ou de masse totale.

Dans ce mode de réalisation, lorsque les socles maître et satellite, formés en l'espèce respectivement par le premier socle 2 et le deuxième socle 3, sont soumis à un poids respectif exercé par un seul et même objet qui repose simultanément à la fois sur le premier socle de pesée 2 et le deuxième socle de pesée 3, chacun desdits premiers et deuxième socles de pesée 2, 3 détermine respectivement une première et une deuxième fraction du poids total de l'objet à peser. L'unité de traitement de signal est dans ce cas avantageusement configuré pour calculer le poids total (ou la masse totale) à partir desdites première et deuxième fractions mesurées par chaque socle de pesée 2, 3.

Alternativement, le calcul permettant d'obtenir la valeur de poids total ou de masse totale peut être effectué par une unité de traitement incluse dans le terminal externe 6, auquel cas le socle maître ne comprend pas nécessairement d'unité de traitement de signal. Dans ce cas, le signal de sortie est représentatif de chacun des premier et deuxième signaux pris indépendamment, et le poids total ou la masse totale est calculé par le terminal externe 6, au moyen par exemple d'une application (programme informatique) exécutée par ce dernier.

Il est également envisageable que l'unité de traitement de signal (qu'elle soit incluse dans le socle maître ou corresponde à des moyens de traitement et de calcul embarqué par le terminal externe 6) soit simplement conçue pour déterminer une première valeur de poids ou de masse correspondant au premier signal, et une deuxième valeur de poids ou de masse correspondant au deuxième signal, dans le cas où les premier et deuxième socles de pesée 2, 3 sont utilisés non pas pour mesurer le poids d'un seul et même objet, mais pour mesurer le poids de deux objets différents et distincts, l'un reposant sur le premier socle de pesée 2, tandis que l'autre repose sur le deuxième socle de pesée 3.

Bien entendu, le terminal externe 6 peut proposer à l'utilisateur un choix entre différents modes de fonctionnement, un premier mode de fonctionnement pouvant correspondre par exemple à un calcul de poids total ou de masse totale, tandis qu'un deuxième mode de fonctionnement peut correspondre à une détermination de multiples valeurs de poids ou de masse chacune associée à un socle de pesée.

Conformément à l'invention, le dispositif électronique de pesée 1 comprend par ailleurs un système de commande conçu pour commander une mise en fonctionnement automatique dudit dispositif 1 en réponse à une séparation desdits premier et deuxième socle de pesée 2, 3, ces derniers étant initialement assemblés l'un à l'autre (comme illustré à la figure 2). En d'autres termes, la mise en route automatique de chaque socle de pesée 2, 3 est effectuée en dissociant les deux socles de pesée 2, 3. L'utilisateur peut ainsi aisément démarrer le dispositif électronique de pesée 1 en détachant simplement les premier et deuxième socles de pesée 2, 3 l'un de l'autre. Cela signifie que le système de commande est conçu pour détecter la séparation des premier et deuxième socles de pesée 2, 3 initialement assemblés, et pour déclencher en réponse automatiquement, et de préférence immédiatement, une mise en route du dispositif 1, qui peut se traduire par exemple par une mise sous tension (allumage) du dispositif électronique de pesée 1. Cette mise en fonctionnement correspond avantageusement à la mise en route des capteurs de pesage embarqués dans chacun des premier et deuxième socles de pesée 2, 3, par exemple par fermeture du circuit d'alimentation électrique respectif auxquels ils sont respectivement reliés, de sorte que chaque socle de pesée 2, 3 est alors apte à mesurer un poids s'exerçant sur lui. Avantageusement, la mise en fonctionnement susvisée peut correspondre également à une mise en route des premier et second moyens de communication 4, 5, afin de permettre la transmission et le traitement des signaux de poids en vue d'afficher l'information 7, de préférence en temps réel, par exemple sur l'écran 6A du terminal externe 6. De façon préférentielle, la mise en fonctionnement du terminal externe 6 est réalisée de façon séparée et n'est pas commandée par le système de commande précité. Grâce à cette caractéristique de mise en route automatique du dispositif 1 commandé par la séparation des premier et deuxième socles de pesée 2, 3, l'utilisation du dispositif 1 est particulièrement intuitive, facile et discrète. Cette caractéristique technique contribue également à la simplification du dispositif électronique 1, en supprimant le recours à une interface dédiée destinée à être manipulée directement par l'utilisateur.

Avantageusement, le système de commande est conçu pour commander l'arrêt automatique du fonctionnement du dispositif 1 en réponse à un réassemblage desdits premiers et deuxième socles 2, 3 l'un à l'autre. En d'autres termes, dans ce mode de réalisation particulièrement avantageux, le réassemblage des premiers et deuxième socles 2, 3 l'un à l'autre, à partir d'une configuration dans laquelle lesdits socles 2, 3 sont séparés, permet d'arrêter automatiquement le dispositif 1, c'est-à-dire de le mettre par exemple hors tension, auquel cas les socles de pesée 2, 3 ne sont plus aptes à mesurer un poids et/ou à transmettre une information par le biais des moyens de communication 4, 5 sans fil susvisés.

Alternativement ou de manière complémentaire, le système de commande peut être conçu pour commander l'arrêt automatique du fonctionnement du dispositif 1 en l'absence de poids exercé sur lesdits premier et deuxième socle 2, 3, c'est-à-dire sur l'un et l'autre desdits premier et deuxième socle 2, 3, pendant une durée prédéterminée, et ce que les socles soient séparés (figures 1 et 3) ou réassemblés (figure 2). La durée prédéterminée en question peut être par exemple comprise entre 30 secondes et 5 minutes. Dans un mode de réalisation particulièrement avantageux, l'arrêt du fonctionnement du dispositif 1 peut être commandée soit de manière active, en réponse à un réassemblage des premier et deuxième socles 2, 3 l'un à l'autre, soit de manière passive, en l'absence d'utilisation des premier et deuxième socles 2, 3 pendant ladite durée prédéterminée, ces deux modes de commande de l'arrêt automatique du fonctionnement du dispositif 1 étant avantageusement cumulatifs, de façon à optimiser ainsi la durée de vie des sources d'énergie embarquée dans les socles de pesée 2, 3.

Avantageusement, le système de commande comprend au moins un capteur 8 activable / désactivable embarqué sur l'un desdits premier et deuxième socle de pesée 2, 3, ainsi qu'un actionneur 9 embarqué sur l'autre desdits premier et deuxième socle de pesée 2, 3, ledit actionneur 9 étant conçu pour activer le capteur 8 lorsque lesdits premier et deuxième socle de pesée 2, 3 sont assemblés l'un à l'autre (figure 2) et pour désactiver ledit capteur 8 lorsque lesdits premier et deuxième socles de pesée 2, 3 sont séparés l'un de l'autre. L'activation du capteur 8 génère ainsi un signal qui commande l'arrêt du fonctionnement du dispositif 1, tandis que la désactivation du capteur 8 génère un signal qui commande la mise en fonctionnement automatique du dispositif 1. L'ensemble formé par le capteur 8 et l'actionneur 9 constitue ainsi un ensemble de détection du détachement relatif des premier et deuxième socles de pesée 2, 3.

Par exemple, et conformément au mode de réalisation des figures 1 à 3, le capteur 8 comprend un interrupteur poussoir tandis que l'actionneur 9 comprend une protubérance de poussée. Ainsi, lorsque les premier et deuxième socles de pesée 2, 3 sont assemblés (figure 2), la protubérance de poussée formant avantageusement l'actionneur 9 vient presser l'interrupteur poussoir formant avantageusement le capteur 8 pour amener et maintenir ce dernier dans une position qui correspond à l'activation dudit capteur 8, ce qui commande l'arrêt du fonctionnement du dispositif 1. Lorsque les premier et deuxième socles de pesée 2, 3 sont détachés l'un de l'autre à partir de leur configuration assemblée illustrée à la figure 2, pour se retrouver dans une configuration séparée comme illustré à la figure 1, la protubérance de poussée cesse de presser l'interrupteur poussoir, lequel revient alors automatiquement dans une position correspondant à la désactivation du capteur 8, entraînant ainsi automatiquement la mise en fonctionnement du dispositif 1. La deuxième position de l'interrupteur poussoir est avantageusement une position de rappel élastique, dans laquelle se trouve naturellement l'interrupteur poussoir en l'absence de sollicitation externe, telle qu'une pression exercée par la protubérance de poussée formant avantageusement l'actionneur 9.

Bien entendu, l'invention n'est pas limitée à la mise en œuvre de moyens spécifiques pour former le capteur 8 et l'actionneur 9. Par exemple, il est parfaitement envisageable de recourir, en lieu et place d'un dispositif mécanique tel que celui illustré aux figures, à un capteur 8 de nature optique, l'actionneur 9 assurant dans ce cas une fonction de masquage de la lumière lorsque les premier et deuxième socles 2, 3 sont assemblés. Au contraire, lorsque les premier et deuxième socles 2, 3 sont désassemblés, l'actionneur 9 ne masque plus la lumière de sorte que le capteur 8 est exposé et génère un signal de commande de la mise en fonctionnement du dispositif de pesée 1. Selon encore une autre alternative technique, le capteur 8 peut être constitué par exemple par un capteur magnéto-résistif, du genre capteur CMOS, tandis que l'actionneur 9 comprend un aimant conçu pour exciter le capteur CMOS lorsque les premier et deuxième socles de pesée 2 ,3 sont assemblés l'un à l'autre.

Avantageusement, le premier socle 2 et le deuxième socle 3 comprennent respectivement des premier et second moyens d'accolement 10, 11, de forme complémentaire, conçus pour coopérer en emboîtement mutuel lorsque lesdits premier et deuxième socles de pesée 2, 3 sont assemblés l'un à l'autre. Grâce à cette caractéristique, l'assemblage des socles de pesée 2, 3 est rendu plus intuitif et est donc facilité. Le recours à des formes complémentaires coopérant en emboîtement mutuel permet aussi de conférer un caractère robuste et compact à l'assemblage ainsi obtenu. De préférence et comme illustré aux figures, le premier moyen d'accolement 10 définit une conformation formant un logement au sein duquel est avantageusement disposé le capteur 8, tandis que le deuxième moyen d'accolement 11 définit une conformation mâle contribuant avantageusement à former, ou comportant, ledit actionneur 9, lequel est par exemple formé par la protubérance de poussée illustrée aux figures 1 à 3.

Le positionnement du capteur 8 au fond d'un logement, comme illustré aux figures 1 à 3, permet avantageusement de protéger de manière très simple le capteur 8 et d'éviter son activation intempestive, suite par exemple à une erreur de manipulation. À cette fin, le logement est préférentiellement dimensionné de façon à empêcher un doigt de l'utilisateur de pénétrer en son sein, ce qui permet d'éviter toute pression intempestive sur le capteur 8 lors de la manipulation du dispositif 1, et en particulier du deuxième socle de pesée 3 embarquant le capteur 8.

Avantageusement, le socle maître et le socle satellite, formés de préférence respectivement par les premier et deuxième socles 2, 3, sont pourvus de repères d'orientation mutuelle, visuels et/ou tactiles, pour aider l'utilisateur à positionner lesdits socles maître et satellite l'un par rapport à l'autre de manière à favoriser l'établissement de la connexion de données par rayonnement infrarouge entre le socle satellite et le socle maître comme évoqué précédemment. Avantageusement, cette fonction de repérage d'orientation est assurée par lesdites conformations mâle et femelle évoqués précédemment. L'utilisateur comprend en effet intuitivement que la conformation mâle forme un pointeur qui doit être dirigé en direction de la conformation femelle complémentaire correspondante, ce qui correspond alors avantageusement à une orientation favorisant la réception optimale, par le socle maître, du signal infrarouge provenant du socle satellite.

L'invention n'est toutefois absolument pas limitée à la mise en œuvre de repères d'orientation mutuelle, ni même à la mise en œuvre de conformations mâle et femelle. Ainsi, dans le deuxième mode de réalisation de la figure 4, les premier et deuxième socle 2, 3 présentent des formes complémentaires, en l'espèce en forme de « L », qui permettent leur emboîtement mutuel selon un positionnement tête-bêche. Une multitude d'autres conformations est bien entendu envisageable, avec éventuellement par exemple une alternance de convexités et concavités complémentaires, sans pour autant que l'on sorte du cadre de l'invention.

Avantageusement, chacun des premier et deuxième socles de pesée 2, 3 est équipé d'une batterie rechargeable respective, pour alimenter par exemple les capteurs et moyens de communication embarqués dans chaque socle 2, 3, de sorte que lesdits socles 2, 3 sont énergétiquement autonomes. Avantageusement, seul l'un desdits premier et deuxième socles de pesée 2, 3 est équipé d'un module de charge ou d'un port de liaison à un module de charge, le dispositif 1 comprenant par ailleurs dans ce cas des moyens de liaison électrique entre le module de charge (ou le port de connexion au module de charge) et chacune des batteries à charger. Pour la batterie rechargeable embarquée par le socle de pesée qui intègre le module de charge ou le port de connexion au module de charge, la liaison électrique entre ladite batterie et le module de charge ou le port de connexion en question est effectué par un élément conducteur (fil ou autre) embarquée au sein du socle en question. Pour la batterie rechargeable embarquée par l'autre socle de pesée, la liaison électrique peut s'opérer par exemple soit par des moyens sans contact (induction), soit par l'établissement d'un contact électrique entre les premier et deuxième socles de pesée 2, 3 lorsqu'ils sont assemblés. Par exemple, le socle maître, formé en l'espèce par le premier socle de pesée 2, inclut d'une part un port de charge 12 relié électriquement à la batterie rechargeable embarquée dans le premier socle de pesée 2, et d'autre part un premier contact électrique 14 disposé sur la surface du premier socle de pesée 2. Le port de charge 12 est avantageusement destiné à être connecté, par l'intermédiaire d'un câble de recharge 13, à une source d'énergie externe, au moyen par exemple d'un connecteur de type USB. Le socle satellite, constitué en l'espèce par le deuxième socle de pesée 3, inclut quant à lui un deuxième contact électrique 15 relié électriquement à la batterie rechargeable embarquée dans le socle de pesée satellite, par l'intermédiaire par exemple d'un conducteur (fil électrique ou autre) embarqué au sein dudit deuxième socle de pesée 3. Le deuxième contact électrique 15 est disposé avantageusement en surface dudit deuxième socle de pesée 3, de façon que lorsque lesdits premier et deuxième socles de pesée 2, 3 sont assemblés l'un à l'autre (figure 2), les premier et deuxième contacteurs électriques 14, 15 viennent en contact électrique mutuel, ce qui permet d'établir une liaison électrique de charge entre la batterie rechargeable embarquée par le socle satellite et la source d'énergie externe.

Grâce à cette conception spécifique, la recharge de toutes les batteries du dispositif 1 s'effectue de manière extrêmement simple et simultanée, en limitant la connectique et le nombre de composants électroniques et électriques requis. L'invention n'est bien entendu absolument pas limitée à ce mode de réalisation particulier, et d'autres variantes sont tout à fait envisageables, comme par exemple une variante mettant en œuvre une station qui fait office de socle de rangement et de station de recharge et est destinée à recevoir les premier et deuxième socles de pesée 2, 3 assemblés ou non pour en recharger les batteries.

Un exemple d'utilisation du dispositif électronique de pesée conforme au mode de réalisation des figures 1 à 3 va maintenant être décrit.

Dans ce mode de réalisation, les premier et deuxième socles de pesée 2, 3 présentent des formes sensiblement analogues assimilables globalement à un parallélépipède allongé, de préférence rectangle, présentant de préférence une épaisseur E inférieure ou égale à 20 mm, et de façon encore plus préférentielle inférieure ou égale à 15 mm, afin de favoriser un usage discret et permettre un transport facile. De façon particulièrement préférentielle, les autres dimensions (hauteur et largeur) de chaque socle de pesée 2, 3 sont choisies pour qu'une fois assemblés, l'encombrement des premier et deuxième socles de pesée 2, 3 corresponde sensiblement à celui d'un téléphone multifonction, pour favoriser là encore le transport et l'utilisation discrète du dispositif électronique de pesée 1. Par exemple, chaque socle 2, 3 présente une hauteur comprise entre 100 et 200 mm, de préférence environ 150 mm, ainsi qu'une largeur comprise par exemple entre 20 et 50 mm, de préférence environ 30 mm.

Le dispositif 1 en question comprend également avantageusement un étui (par exemple une boîte ou une pochette souple) pour y ranger les premier et deuxième socles de pesée 2, 3 assemblés l'un l'autre lorsque le dispositif 1 n'est pas utilisé.

L'utilisateur peut ainsi placer l'étui contenant les socles de pesée 2, 3 assemblés dans sa poche, puis sortir l'étui au moment du repas et en extraire les premier et deuxième socles de pesée 2, 3 assemblés. L'utilisateur exerce alors manuellement un effort de dissociation sur les socles de pesée 2, 3, qui surmonte par exemple la force magnétique de maintien exercé par l'organe de verrouillage. La séparation des premier et deuxième socles de pesée 2, 3 commande immédiatement et automatiquement la mise en fonctionnement du dispositif 1, c'est-à-dire la mise sous tension des capteurs de pesage embarqués dans chacun des premier et deuxième socles de pesée 2, 3, de même que la mise sous tension des premier et deuxième moyens de communication 4, 5. L'utilisateur lance alors (ou a lancé auparavant) l'exécution sur son téléphone multifonction d'une application dédiée permettant le traitement et l'affichage sur l'écran 6A de données issus des mesures de poids effectués par les socles 2, 3.

Chaque socle de pesée 2, 3 est alors disposé de manière appropriée l'un par rapport à l'autre de façon à reposer, de façon stable, sur sa face inférieure respective 2A, 3A contre une table. L'utilisateur dépose ensuite sur les premier et deuxième socles de pesée 2, 3 un plateau ou une assiette, de sorte que chaque socle de pesée 2, 3 est ainsi pressé, sous l'influence du poids du plateau ou de l'assiette en question, entre la table d'une part et le plateau ou l'assiette à peser d'autre part. L'information de poids mesurée par le capteur du socle satellite formé par le deuxième socle de pesée 3 est envoyé par rayonnement infrarouge au socle maître formé par le premier socle de pesée 2. Ce même socle maître mesure également un poids. L'unité de traitement de signal embarqué dans le socle maître calcule alors, à partir des informations de poids provenant d'une part du premier socle de pesée 2, et d'autre part du deuxième socle de pesée 3, une valeur de masse totale en temps réel, et envoie cette information de masse totale, par communication radio, de préférence selon un protocole Bluetooth ^{®} au téléphone portable formant en l'espèce le terminal externe 6. Ce dernier affiche alors sur son écran 6A, en temps réel, la valeur de masse totale en question (information 7).

Avantageusement, l'unité de traitement de signal embarqué par le socle maître (ou les moyens de traitement formés par l'application dédiée exécutée par le terminal externe 6) est conçue pour traiter les différentes données de poids ou masse mesurées en temps réel au cours du repas, pour effectuer par exemple un comptage de la masse totale d'aliments pesée et/ou un décomptage de la masse totale d'aliments consommés (dans ce dernier cas, le décomptage permet de ne pas peser les aliments au préalable et de décompter uniquement ce qui consommé). L'ensemble des données ainsi collectées au moyen de l'application exécutée par le téléphone portable formant le terminal externe 6 peut être traité pour établir des informations de suivi, lesquelles peuvent être consultés *a posteriori* par l'utilisateur, une fois le repas terminé.

Lorsque le repas est terminé, l'utilisateur réassemble les premier et deuxième socles de pesée 2, 3 ce qui entraîne immédiatement et automatiquement l'arrêt du fonctionnement du dispositif 1. Les premier et deuxième socles de pesée 2, 3 ainsi assemblées et mis hors tension peuvent être replacées dans leur étui et ensuite glissés dans la poche de l'utilisateur, par exemple aux côtés de son téléphone multifonction.

L'invention permet ainsi de procéder à des opérations de pesage de manière extrêmement simple, pratique, rapide et discrète.

## Revendications

1. Dispositif électronique de pesée (1) comprenant
- une pluralité de socles de pesées, incluant au moins un premier et un deuxième socle de pesée (2, 3) **caractérisé en ce que** les au moins un premier et un deuxième socle de pesée sont aptes à être assemblés l'un à l'autre de manière amovible, chacun étant conçu pour mesurer un poids s'exerçant sur lui, et
- un système de commande conçu pour commander une mise en fonctionnement automatique dudit dispositif (1) en réponse à une séparation desdits premier et deuxième socles de pesée (2, 3), ces derniers étant initialement assemblés l'un à l'autre.

2. Dispositif électronique de pesée (1) selon la revendication précédente, **caractérisé en ce que** ledit système de commande est conçu pour commander l'arrêt automatique du fonctionnement du dispositif (1) en réponse à un réassemblage desdits premier et deuxième socles (2, 3) l'un à l'autre.

3. Dispositif électronique de pesée (1) selon l'une quelconque des revendications précédentes, **caractérisé en ce que** ledit système de commande est conçu pour commander l'arrêt automatique du fonctionnement du dispositif (1) en l'absence de poids exercé sur lesdits premier et deuxième socles (2, 3) pendant une durée prédéterminée.

4. Dispositif électronique de pesée (1) selon l'une quelconque des revendications précédentes, **caractérisé en ce que** :
- ladite pluralité de socles de pesée comprend un socle maître formé par le premier socle (2) et au moins un socle satellite formé par le deuxième socle (3),
- ledit dispositif (1) comprend des premiers moyens de communication (4) sans fil entre le socle satellite et ledit socle maître, pour transmettre du socle satellite au socle maître un premier signal représentatif du poids mesuré par le socle satellite,
- ledit dispositif (1) comprend des seconds moyens de communication (5) sans fil entre le socle maître et un terminal externe (6), par exemple un téléphone multifonction, pour transmettre du socle maître audit terminal externe (6) un signal de sortie représentatif dudit premier signal et d'un deuxième signal représentatif d'un poids mesuré par le socle maître, en vue d'une présentation à un utilisateur, par ledit terminal externe (6), d'au moins une information (7) relative aux poids mesurés respectivement par les socles maître et satellite.

5. Dispositif (1) selon la revendication précédente, **caractérisé en ce que** le socle maître comprend une unité de traitement de signal configurée pour calculer, à partir des premier et deuxième signaux, une valeur de poids total ou de masse totale appliqué sur les socles maître et satellite, de sorte que ledit signal de sortie est représentatif de ladite valeur de poids total ou de masse totale.

6. Dispositif (1) selon l'une quelconque des revendications 4 et 5, **caractérisé en ce que** les premiers moyens de communication (4) fil sont conçus pour établir une connexion de données par rayonnement infrarouge entre le socle satellite et le socle maître.

7. Dispositif (1) selon la revendication précédente, **caractérisé en ce que** le socle maître et le socle satellite sont pourvus de repères d'orientation mutuelle, visuels et/ou tactiles, pour aider l'utilisateur à positionner lesdits socles maître et satellite l'un par rapport à l'autre de manière à favoriser l'établissement de ladite connexion de données par rayonnement infrarouge.

8. Dispositif (1) selon l'une quelconque des revendications 4 à 7, **caractérisé en ce que** les seconds moyens de communication (5) sans fil sont conçus pour établir une connexion de données par radiofréquences, de préférence selon un protocole Bluetooth^{®}, entre le socle maître et le terminal externe (6).

9. Dispositif de pesée (1) selon l'une quelconque des revendications précédentes **caractérisé en ce que** le premier socle (2) et le deuxième socle (3) comprennent respectivement des premier et second moyens d'accolement (10, 11) de formes complémentaires conçus pour coopérer en emboîtement mutuel lorsque lesdits premier et deuxième socles de pesée (2, 3) sont assemblées l'un à l'autre.

10. Dispositif de pesée (1) selon l'une des revendications précédentes caractérisé en que ledit système de commande comprend au moins un capteur (8) activable / désactivable embarqué sur l'un desdits premier et deuxième socles de pesée (2, 3), ainsi qu'un actionneur (9) embarqué sur l'autre desdits premier et deuxième socles de pesée (2, 3), ledit actionneur (9) étant conçu pour activer ledit capteur (8) lorsque lesdits premier et deuxième socles de pesée (2, 3) sont assemblés l'un à l'autre, et pour désactiver ledit capteur (8) lorsque lesdits premier et deuxième socles de pesée (2, 3) sont séparés l'un de l'autre.

11. Dispositif de pesée (1) selon les revendications 9 et 10 **caractérisé en ce que** le premier moyen d'accolement (10) définit une conformation femelle formant un logement au sein duquel est disposé ledit capteur (8), tandis que le deuxième moyen d'accolement (11) définit une conformation mâle contribuant à former, ou portant, ledit actionneur (9).

12. Dispositif de pesée selon l'une des revendications 9 à 11 **caractérisé en ce que** ledit capteur (8) comprend un interrupteur poussoir, tandis que ledit actionneur (9) comprend une protubérance de poussée.

13. Dispositif de pesée (1) selon l'une quelconque des revendications précédentes **caractérisé en ce qu'**il comprend un organe de verrouillage pour maintenir assemblés l'un à l'autre lesdits desdits premier et deuxième socles (2, 3).

14. Dispositif de pesée (1) selon l'une quelconque des revendications précédentes, **caractérisé en ce qu'**il forme une balance de table ou un pèse-personne.

## Patentansprüche

1. Elektronische Wiegevorrichtung (1), umfassend:
- Eine Vielzahl von Wiegesockeln, die mindestens einen ersten und einen zweiten Wiegesockel (2, 3) beinhalten, **dadurch gekennzeichnet, dass** der mindestens eine erste und eine zweite Wiegesockel imstande sind, in trennbarer Form miteinander zusammengesetzt zu werden, wobei jeder gestaltet ist, um ein Gewicht zu messen, das darauf ausgeübt wird, und
- ein Steuerungssystem, das gestaltet ist, um eine automatische Inbetriebnahme der Vorrichtung (1) als Reaktion auf eine Trennung des ersten und zweiten Wiegesockels (2, 3) zu steuern, wobei diese letzteren ursprünglich miteinander zusammengesetzt waren.

2. Elektronische Wiegevorrichtung (1) nach dem vorstehenden Anspruch, **dadurch gekennzeichnet, dass** das Steuerungssystem gestaltet ist, um den automatischen Halt des Betriebs der Vorrichtung (1) als Reaktion auf eine erneute Zusammensetzung des ersten und zweiten Sockels (2, 3) miteinander zu steuern.

3. Elektronische Wiegevorrichtung (1) nach einem der vorstehenden Ansprüche, **dadurch gekennzeichnet, dass** das Steuerungssystem gestaltet ist, um den automatischen Halt des Betriebs der Vorrichtung (1) bei Abwesenheit von Gewicht zu steuern, das auf den ersten und zweiten Sockel (2, 3) eine vorbestimmte Dauer lang ausgeübt wird.

4. Elektronische Wiegevorrichtung (1) nach einem der vorstehenden Ansprüche, **dadurch gekennzeichnet, dass**:
- die Vielzahl von Wiegesockeln einen Master-Sockel, der durch den ersten Sockel (2) gebildet wird, und mindestens einen Satelliten-Sockel umfasst, der durch den zweiten Sockel (3) gebildet wird,
- die Vorrichtung (1) erste drahtlose Kommunikationsmittel (4) zwischen dem Satelliten-Sockel und dem Master-Sockel umfasst, um vom Satelliten-Sockel zum Master-Sockel ein erstes Signal zu übertragen, das repräsentativ für das durch den Satellitensockel gemessene Gewicht ist,
- die Vorrichtung (1) zweite drahtlose Kommunikationsmittel (5) zwischen dem Master-Sockel und einem externen Terminal (6), beispielsweise einem Mehrzweck-Telefon umfasst, um vom Master-Sockel zum externen Terminal (6) ein Ausgangssignal zu übertragen, das repräsentativ für das erste Signal und ein zweites Signal ist, das repräsentativ für ein vom Master-Sockel gemessenes Gewicht ist, in Hinblick auf eine Präsentation für einen Nutzer, durch das externe Terminal (6) mindestens einer Information (7) in Bezug auf die jeweils durch den Master- und Satelliten-Sockel gemessenen Gewichte.

5. Vorrichtung (1) nach dem vorstehenden Anspruch, **dadurch gekennzeichnet, dass** der Master-Sockel eine erste Signalverarbeitungseinheit umfasst, die konfiguriert ist, um aus dem ersten und zweiten Signal einen Gesamtgewichts- oder Gesamtmassenwert zu berechnen, der auf die Master- und Satelliten-Sockel ausgeübt wird, sodass das Ausgangssignal repräsentativ für den Gesamtgewichts- oder Gesamtmassenwert ist.

6. Vorrichtung (1) nach einem der Ansprüche 4 und 5, **dadurch gekennzeichnet, dass** die ersten drahtlosen Kommunikationsmittel (4) gestaltet sind, um eine Datenverbindung durch Infrarotstrahlung zwischen dem Satelliten-Sockel und Master-Sockel aufzubauen.

7. Vorrichtung (1) nach dem vorstehenden Anspruch, **dadurch gekennzeichnet, dass** der Master-Sockel und der Satelliten-Sockel mit optischen und/oder berührungsempfindlichen Markierungen zur gegenseitigen Ausrichtung versehen sind, um dem Nutzer dabei zu helfen, den Master- und Satellitensockel derart zueinander zu positionieren, um den Aufbau der Datenverbindung durch Infrarotstrahlung zu fördern.

8. Vorrichtung (1) nach einem der Ansprüche 4 bis 7, **dadurch gekennzeichnet, dass** die zweiten drahtlosen Kommunikationsmittel (5) gestaltet sind, um eine Datenverbindung durch Funkfrequenzen, vorzugsweise entsprechend einem Bluetooth^{®} Protokoll zwischen dem Master-Sockel und dem externen Terminal (6) aufzubauen.

9. Vorrichtung (1) nach einem der vorstehenden Ansprüche, **dadurch gekennzeichnet, dass** der erste Sockel (2) und der zweite Sockel (3) jeweils erste und zweite Anbaumittel (10, 11) in ergänzenden Formen umfassen, die gestaltet sind, um durch gegenseitiges Einrasten zusammenzuwirken, wenn der erste und zweite Wiegesockel (2, 3) miteinander zusammengesetzt werden.

10. Wiegevorrichtung (1) nach einem der vorstehenden Ansprüche, **dadurch gekennzeichnet, dass** das Steuerungssystem mindestens einen aktivierbaren/deaktivierbaren Sensor (8) umfasst, der in einem des ersten und zweiten Wiegesockels (2, 3) eingebaut ist, sowie einen Stellantrieb (9), der auf dem anderen des ersten und zweiten Wiegesockels (2, 3) eingebaut ist, wobei der Stellantrieb (9) gestaltet ist, um de Sensor (8) zu aktivieren, wenn der erste und zweite Wiegesockel (2, 3) miteinander zusammengesetzt werden, und um den Sensor (8) zu deaktivieren, wenn der der erste und zweite Wiegesockel (2, 3) voneinander getrennt werden.

11. Wiegevorrichtung (1) nach den Ansprüchen 9 und 10, **dadurch gekennzeichnet, dass** das erste Anbaumittel (10) eine Buchsenverformung definiert, die eine Aufnahme bildet, in der der Sensor (8) angeordnet ist, während das zweite Anbaumittel (11) eine Steckverformung definiert, die dazu beiträgt, den Stellantrieb (9) zu bilden oder diesen tragen.

12. Wiegevorrichtung nach einem der Ansprüche 9 bis 11, **dadurch gekennzeichnet, dass** der Sensor (8) einen Druckschalter umfasst, während der Stellantrieb (9) einen Schiebevorsprung umfasst.

13. Wiegevorrichtung (1) nach einem der vorstehenden Ansprüche, **dadurch gekennzeichnet, dass** sie ein Verriegelungsorgan umfasst, um den ersten und zweiten Sockel (2, 3) miteinander zusammengesetzt zu halten.

14. Wiegevorrichtung (1) nach einem der vorstehenden Ansprüche, **dadurch gekennzeichnet, dass** sie eine Tischwaage oder eine Personenwaage bildet.

## Claims

1. Electronic weighing device (1) comprising:
- a plurality of weighing bases, including at least one first and one second weighing base (2, 3), **characterised in that** the at least one first and one second weighing base are suitable for assembly with one another in a detachable manner, each one being configured to measure a weight acting thereon, and
- a control system designed to control an automatic operation of said device (1) in response to a separation of said first and second weighing bases (2, 3), the latter being initially assembled with one another.

2. Electronic weighing device (1) according to the preceding claim, **characterised in that** said control system is designed to control the automatic shutdown of the operation of the device (1) in response to a reassembly of said first and second bases (2, 3) with one another.

3. Electronic weighing device (1) according to any of the preceding claims, **characterised in that** said control system is designed to control the automatic shutdown of the operation of the device (1) in the absence of weight exerted on said first and second bases (2, 3) for a predetermined period.

4. Electronic weighing device (1) according to any of the preceding claims, **characterised in that**:
- said plurality of weighing bases comprises a master base formed by the first base (2) and at least one satellite base formed by the second base (3),
- said device (1) comprises first wireless communication means (4) between the satellite base and said master base, for transmitting from the satellite base to the master base a first signal representative of the weight measured by the satellite base,
- said device (1) comprises second wireless communication means (5) between the master base and an external terminal (6), for example a multifunctional telephone, for transmitting from the master base to said external terminal (6) an output signal representative of said first signal and a second signal representative of a weight measured by the master base, for presenting to a user, via said external terminal (6), at least one piece of information (7) relating to the weights measured respectively by the master and satellite bases.

5. Device (1) according to the preceding claim, **characterised in that** the master base comprises a signal processing unit configured to calculate, from the first and second signals, a total weight or mass value applied to the master and satellite bases, such that said output signal is representative of said total weight or mass value.

6. Device (1) according to any of claims 4 and 5, **characterised in that** the first wireless communication means (4) are designed to establish a data connection by infrared radiation between the satellite base and the master base.

7. Device (1) according to the preceding claim, **characterised in that** the master base and the satellite base are provided with mutual orientation markers, which are visual and/or tactile, to assist the user with positioning said master and satellite bases relative to one another so as to facilitate the establishment of said data connection by infrared radiation.

8. Device (1) according to any of claims 4 to 7, **characterised in that** the second wireless communication means (5) are designed to establish a radiofrequency data connection, preferably using a Bluetooth^{®} protocol between the master base and the external terminal (6).

9. Weighing device (1) according to any of the preceding claims, **characterised in that** the first base (2) and the second base (3) comprise respectively first and second attachment means (10, 11) with complementary shapes designed to cooperate with mutual interlocking when said first and second weighing bases (2, 3) are assembled with one another.

10. Weighing device (1) according to any of the preceding claims, **characterised in that** said control system comprises at least one activatable/deactivatable sensor (8) embedded in one of said first and second weighing bases (2, 3), as well as an actuator (9) embedded in the other of said first and second weighing bases (2, 3), said actuator (9) being designed to activate said sensor (8) when said first and second weighing bases (2, 3) are assembled with one another, and to deactivate said sensor (8) when said first and second weighing bases (2, 3) are separated from one another.

11. Weighing device (1) according to claims 9 and 10, **characterised in that** the first attachment means (10) defines a female structure forming a housing within which said sensor (8) is arranged, while the second attachment means (11) defines a male structure helping to form or bear said actuator (9).

12. Weighing device according to any of claims 9 to 11, **characterised in that** said sensor (8) comprises a push switch, while said actuator (9) comprises a push protrusion.

13. Weighing device (1) according to any of the preceding claims, **characterised in that** it comprises a locking member for holding said first and second bases (2, 3) assembled with one another.

14. Weighing device (1) according to any of the preceding claims, **characterised in that** it forms a table scale or a bathroom scale.
